Europäisches Patentamt

European Patent Office

Office européen des brevets

(11) Veröffentlichungsnummer: **0 256 241**
**A2**

(12) **EUROPÄISCHE PATENTANMELDUNG**

(21) Anmeldenummer: **87108430.7**

(22) Anmeldetag: **11.06.87**

(51) Int. Cl.⁴: **B29B 17/00** , B29B 13/10 ,
B02C 18/40

(30) Priorität: **02.07.86 HU 276186**

(43) Veröffentlichungstag der Anmeldung:
**24.02.88 Patentblatt 88/08**

(84) Benannte Vertragsstaaten:
**AT BE CH DE ES FR GB IT LI LU NL SE**

(71) Anmelder: **Taurus Gumiipari Vállalat**
**Kerepesi ut 17**
**Budapest VIII(HU)**

(72) Erfinder: **Tatai, Ilona, Dipl.-Ing. Dr.**
**Gvadányi út 109**
**H-1144 Budapest(HU)**
Erfinder: **Gündisch, Gusztav, Dipl.-Ing.**
**Béla Király út 5**
**H-1125 Budapest(HU)**
Erfinder: **Szöts, Géza, Dipl.-Ing.**
**Népstadion út 33**
**H-1143 Budapest(HU)**
Erfinder: **Molnár, Károly, Dipl.-Ing.**
**Munkásotthon u. 51.XI.43**
**H-1043 Budapest(HU)**

(74) Vertreter: **Patentanwälte Viering & Jentschura**
**Steinsdorfstrasse 6**
**D-8000 München 22(DE)**

(54) **Einrichtung zum Zerkleinern organischer Materialien.**

(57) Die Erfindung betrifft eine Einrichtung zum Zerkleinern organischer Materialien, die eine Fließzerkleinerungseinheit (5) aufweist, welche aus mindestens einem mit radialen und/oder axial angeordneten Fließöffnungen (25) versehenen Fließpreßwerkzeug mit einem mit diesem zusammenwirkenden axial verschiebbaren Preßkopf (29, 30) besteht. Vor der Fließzerkleinerungseinheit (5) sind eine Mitteldruck-Verdichtungseinheit (4), und vor dieser eine Niederdruck-Aufgabe-und Vorverdichtungseinheit (3) - in der Richtung des Materialflusses betrachtet - angeordnet. Die Niederdruck-Aufgabe-und Vorverdichtungseinheit weist mindestens eine Schnecke (6, 7, 8) auf, deren Abgabeende an einen sich trichterförmig verengenden Innenraum (18, 19) der Mitteldruck-Verdichtungseinheit (4) an dessen den größeren Querschnitt aufweisenden Ende anschließt, währenddessen das den kleineren Querschnitt aufweisende Ende mit einem Druckraum (28) der Fließpreßwerkzeuge (20, 21) in

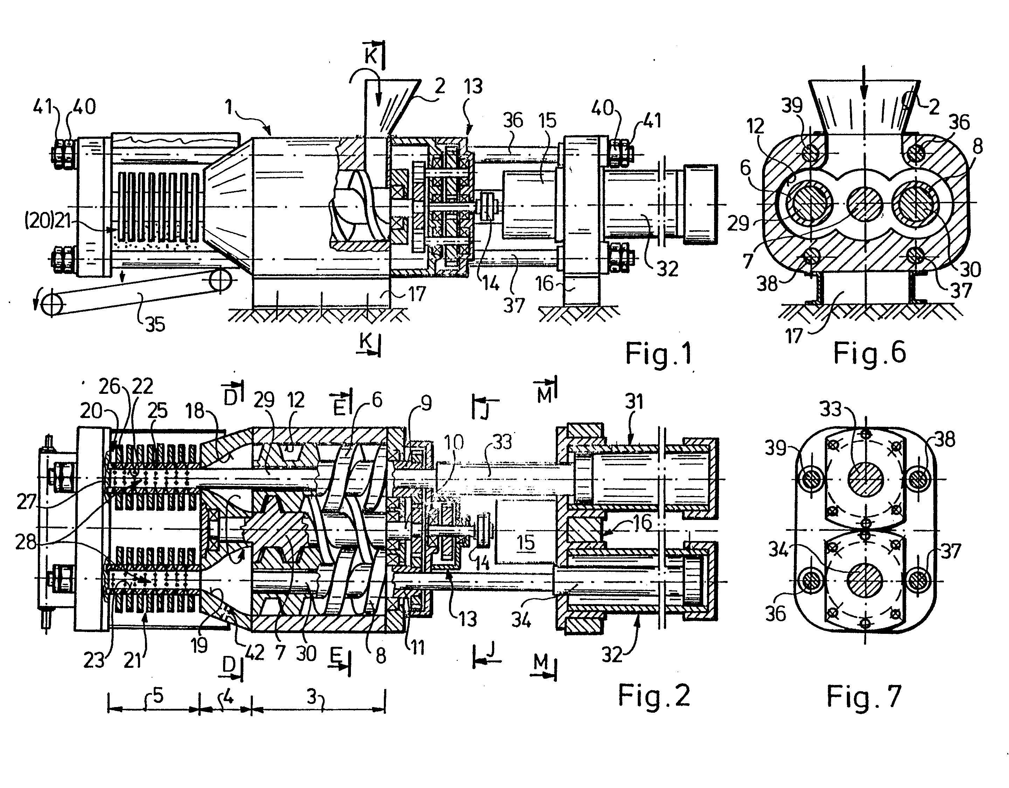

Verbindung steht (Fig. 2).

Fig. 2

# Einrichtung zum Zerkleinern organischer Materialien

Die Erfindung betrifft eine Einrichtung zum Zerkleinern von organischen Materialien.

Wie bekannt, wird zum Zerkleinern von organischen Stoffen, beispielsweise besonders von Kunststoffen (Kunststoffolien, Spritzgußerzeugnissen, und geblasenen Kunststoffprodukten), ferner Holz-und Pflanzenteilen, landwirtschaftlichen Abfallprodukten, Haushaltsmüll, abgenützten Gummireifen und anderem Abfall der Gummi-und Reifenindustrie, und dgl., d.h. zu ihrer Zerkleinerung vor ihrer Weiterverarbeitung, gegenwärtig meist das Vermahlen angewendet, wozu verschiedene Hammermühlen, Drehscheibenmahlmaschinen, Walzenstühle oder Zerquetschextruder eingesetzt werden. Solche Lösung beschreiben z. B. die DE-C-2 503 621 und 3 312 787, sowie die US-A-4 050 637 und die FR-A-2 278 399.

Der Hauptmangel solcher bekannten Zerkleinerungsgeräte besteht darin, daß sie sehr energieintensiv und kostenintensiv sind, ferner sich das Mahlgut infolge der auftretenden großen Reibungskräfte stark erwärmt, da ja ein ausschlaggebender Teil der zugeführten Energie unerwünscht in Reibungswärme umgewandelt wird.

Bekannt ist ferner aus der DE-C-2 312 753 der Versuch, den Wirkungsgrad der mechanischen Zerkleinerung von Gummiabfällen dadurch zu verbessern, daß diese vorher einer Tiefkühlung unterzogen wurden. Die Erfahrungen der Praxis aber brachten den Nachweis, daß durch die Tiefkühlung die an sich schon beträchtlichen Kosten noch weiter erhöht werden.

Die HU-A-177 909 und die JP-A-1 288 310, die CS-A-237 304, und die US-A-4 474 334 (von der gleichen Anmelderin) betreffen Verfahren, bei denen Gummiabfälle, besonders abgefahrene Gummireifen, bei Umgebungstemperatur durch Fließpressen zerkleinert werden. Das Fließpreßwerkzeug ist dabei mit einer Reihe von radial und/oder axial angeordneten Fließöffnungen versehen. Die Einrichtung ist ferner mit einem das Material aufnehmenden und im Fließpreßwerkzeug in axialer Richtung verschiebbaren Preßkopf versehen. Mit dieser intermittierend arbeitende Einrichtung konnten der spezifische Energiebedarf im Vergleich zu den früheren Geräten beträchtlich gesenkt und die Produktivität erhöht werden.

Mit unserer Erfindung verfolgten wir das Ziel, eine solche Zerkleinerungseinrichtung zu schaffen, mittels welcher der Energieverbrauch für das Zerkleinern weiter vermindert werden kann, welche ferner zum Zerkleinern von organischen Materialien universell verwendbar ist und mit welcher die physische Belastung des Bedienungspersonals auf ein Mindestmaß eingeschränkt werden kann.

Zur Lösung der gestellten Aufgabe gingen wir von einer oben erwähnten Einrichtung aus, deren Fließpreßzerkleinerungseinheit aus mindestens einem mit axial und/oder radial angeordneten Fließöffnungen versehenen Fließpreßwerkzeug und einem mit diesem zusammenarbeitenden, in axialer Richtung verschiebbaren Preßkopf besteht.

Diese Einrichtung wird erfindungsgemäß dadurch weiterentwickelt, daß vor der Hochdruck-Fließpreßzerkleinerungseinheit - in der Fortschrittsrichtung des zu zerkleinernden Materials gesehen - eine Mitteldruckverdichtungseinheit, vor dieser aber eine Niederdruck-Aufgabe-und Vorverdichtungseinheit angeordnet ist. Ferner weist die Niederdruck-Aufgabe-und Verdichtungseinheit mindestens eine angetriebene Schnecke auf, deren austragendes Ende mit einem trichterartig verengten Innenraum der Mitteldruck-Verdichtungseinheit an dessen den größeren Durchgangsquerschnitt aufweisenden Ende verbunden ist, während das Ende mit kleinerem Querschnitt an den Druckraum des Fließpreßwerkzeuges angeschlossen ist.

Bevorzugt wird eine solche Ausführungsform, bei welcher die Niederdruck-Auf-gabe-und Vorverdichtungseinheit zu der nachfolgenden Mitteldruck-Verdichtungseinheit und der Hochdruck-Fließpreßzerkleinerungseinheit koaxial angeordnet ist. Dadurch erhält man eine kompakte, wenig Raum beanspruchende Bauweise.

Die Vorrichtung kann auch für einen kontinuierlichen Betrieb ausgestaltet werden, wenn die Niederdruck-Aufgabe-und Vorverdichtungseinheit, die Mitteldruck-Verdichtungseinheit, sowie die Hochdruck-Fließpreßzerkleinerungseinheit jeweils in doppelter Ausführung eingebaut werden. Sie können dann abwechselnd betrieben werden.

Eine besonders wirksame Materialaufgabe und Vorverdichtung kann dadurch er zielt werden, daß zwischen die beiden zusammenarbeitenden parallelen Schnecken der Niederdruck-Aufgabe-und Vorverdichtungseinheit zentral noch eine dritte Schnecke in dem gemeinsamen Arbeitsraum des Gehäuses eingebaut ist, wobei die Schnecken vorzugsweise einen gemeinsamen Antrieb haben, dessen Drehzahl regulierbar ist. Hier ist es ferner von besonderem Vorteil, wenn die beiden sich trichterartig verengenden Innenräume der Mitteldruck-Verdichtungseinheit miteinander kommunizieren. Hierduch können nämlich alle drei Schnecken abwechselnd gefüllt und die beiden Fließpreßwerkzeuge mit Material versehen werden.

Eine sehr einfache konstruktive Ausgestaltung kann dadurch erzielt werden, daß die beiden Preßköpfe in den Rohrwellen der beiden seitlichen Schnecken der Niederdruck-Aufgabe-und Verdichtungseinheit axial verschiebbar angeordnet sind.

Der Fließdruck kann wesentlich durch ein weiteres Merkmal der Erfindung vermindert werden, wenn nämlich der Querschnitt der Fleißpreßwerkzeuge der Hochdruck-Fließzerkleinerungseinheit größer als der Querschnitt der Preßköpfe ist. Bei der einfachsten Ausführungsform ist der Druckraum des Fließpreßwerkzeuges zylindrisch, wobei sein Durchmesser mindestens um 10 % größer als der Durchmesser des zylindrischen Preßkopfes ist.

Im folgenden wird die Erfindung anhand der lediglich Ausführungsbeispiele darstellenden Zeichnung näher erläutert.

In der Zeichnung zeigen:

Figur 1 eine Einrichtung gemäß der Erfindung in Seitenansicht, teilweise aufgebrochen,

Figure 2 die Einrichtung nach Figur 1 in Draufsicht, teils im Schnitt,

Figur 3 den Schnitt entlang der Linie D-D in Figur 2,

Figur 4 den Schnitt entlang der Linie E-E in Fugur 2,

Figur 5 den Schnitt entlang der Linie J-J in Figur 2,

Figur 6 den Schnitt entlang der Linie K-K in Figur 2,

Figur 7 den Schnitt entlang der Linie M-M in Figur 2,

Figur 8 ein Detail der Einrichtung nach Figur 2, in vergrößertem Maßstab,

Figur 9 einen Schnitt einer weiterentwickelten Variante des Details nach Fig. 8,

Figur 10 ein Diagramm der Lösungen nach Fig. 8 und 9, und

Figur 11 eine weitere Ausführungsform des Fließpreßwerkzeuges gemäß der Erfindung.

Wie aus den Figuren 1 - 7 ersichtlich, weist die erfindungsgemäße Zerkleinerungseinrichtung ein Gehäuse 1 auf, das zur Aufnahme des zu zerkleinernden Stoffes mit einem Aufgabetrichter 2 versehen ist. Aus Fig. 2 ist gut ersichtlich, daß die Einrichtung in drei Hauptteile unterteilt werden kann, nämlich in eine Niederdruck-Aufgabe-und Vorverdichtungseinheit 3, eine Mitteldruck-Verdichtungseinheit 4 und in eine Hochdruck-Fließzerkleinerungseinheit 5.

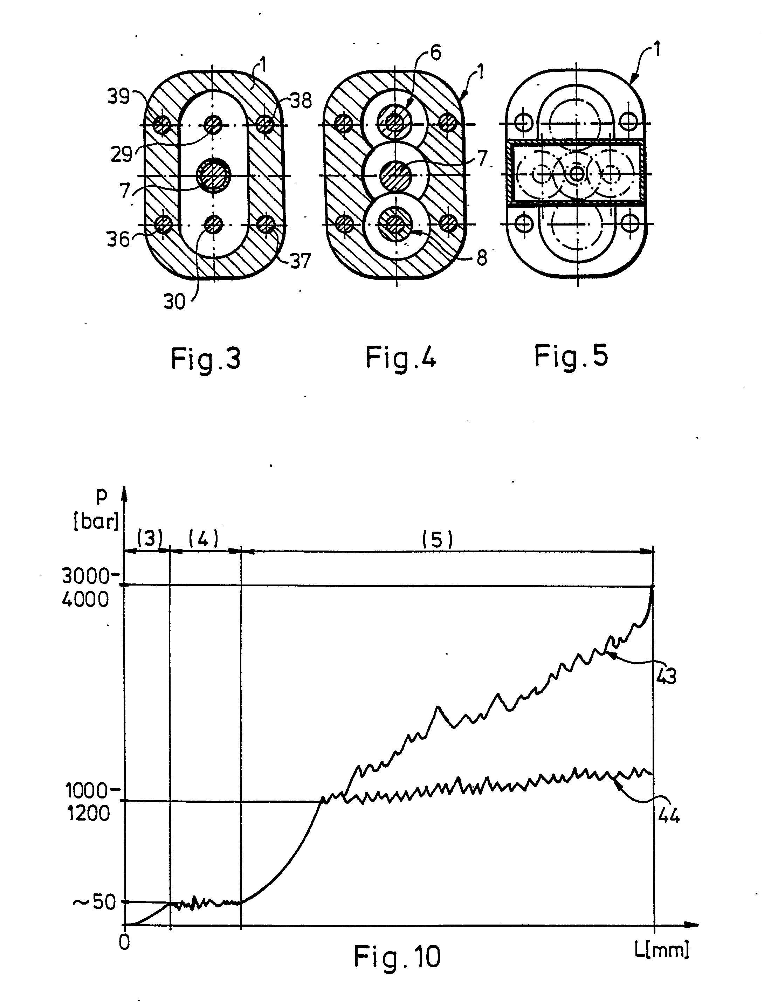

Die Niedderdruck-Aufgabe-und Vorverdichtungseinheit 3 besteht im vorliegenden Falle aus drei ineinandergreifenden Schnecken 6, 7 und 8. Diese sind in dem Gehäuse 1 in einer gemeinsamen horizontalen Ebene parallel zueinander angeordnet und ihre Wellen 9, 10 und 11 sind im Gehäuse 1 drehbar gelagert (Fig. 2 und Fig. 4). Die beiden seitlichen Wellen, d.h. die Wellen 9 und 11, sind bei dieser Ausführung als Hohlwellen ausgestaltet, (worauf im späteren noch zurückgekommen wird).

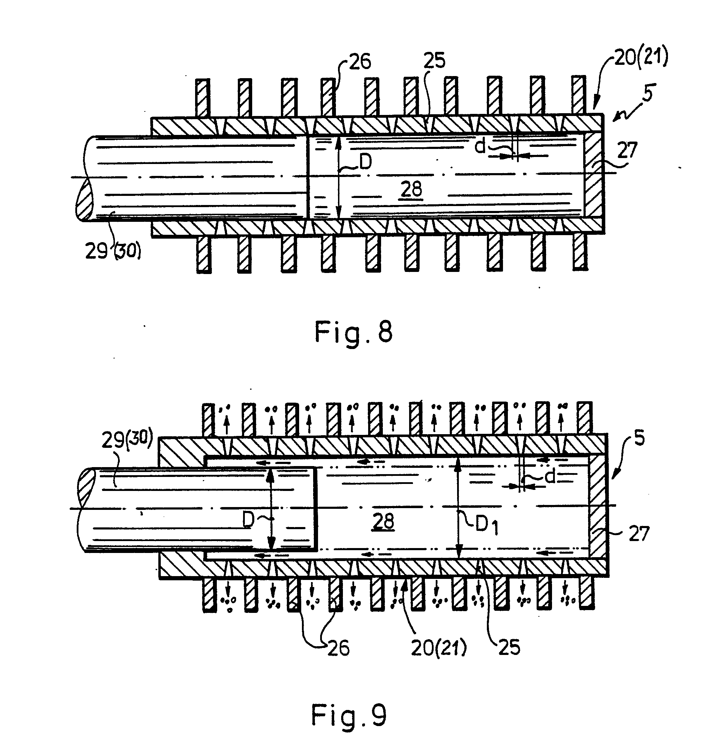

Ein gemeinsamer Arbeitsraum des Gehäuses 1, welcher die drei Schnecken 6, 7 und 8 aufnimmt, ist mit der Bezugsnummer 12 bezeichnet (Fig. 2 und 6). In diesem erfolgt die Aufgabe der zu zerkleinernden organischen Materialien und deren Vorverdichtung als erste Vorstufe mit den Schnecken 6 - 8 bzw. zwischen den seitlichen Schnecken 6 und 8 sowie dem Innenmantel des Arbeitsraumes 12. Im vorliegenden Falle sind die Schnecken 6 und 8 linksgängig ist und haben eine Drehrichtung nach rechts, während die Schnecke 7 rechtsgängig ist und eine Drehrichtung nach links hat.

Die Wellen 9 - 11 der Schnecken 6 - 8 sind im vorliegenden Fall mit einem gemeinsamen Antrieb 13 in Antriebsverbindung, welcher über eine Wellenkupplung 14 an einem Antriebsmotor 15 angeschlossen ist. Der Antriebsmotor 15 ist auf einem Bock 16 befestigt und kann beispielsweise ein an sich bekannter Elektrooder Hydromotor mit vorzugsweise änderbarer Drehzahl sein. Das Gehäuse 1 aber ist über einen weitere Bock 17 am Fundament befestigt.

An das Austragsende der Förderschnecken 6 - 8 der Niederdruck-Aufgabe-und Vorverdichtungseinheit 3 schließt die Mitteldruck-Verdichtungseinheit 4 an, welche im vorliegenden Falle zwei Innenräume 18 und 19 aufweist, die sich trichterförmig verengen (Fig. 2). Im Innenraum 18 oder 19 der Verdichtungseinheit 4 wird das in der Niederdruck-Aufgabe-und Vorverdichtungseinheit 3 bereits vorverdichtete organische Material bei einem Druck von 30 - 100 bar verdichtet. (Der Wert des Verdichtungsdruckes ist jeweils - von dem zu zerkleinernden organischen Material abhängig - variabel, um den Zerkleinerungswirkungsgrad zu erhöhen.)

An dem verengten Querschnitt der trichterförmigen Innenräume 18 und 19 der Verdichtungseinheit 4 sind Fließpreßwerkzeuge 20 bzw. 21 der erfindungsgemäßen Hochdruck-Fließzerkleinerungseinheit 5 angeschlossen.

Diese haben im vorliegenden Falle rohrartige Mäntel 22 bzw. 23, welche in ihrer ganzen Länge mit gleichmäßig verteilten, radial gerichteten Fließöffnungen 25 und gleichfalls radialen Versteifungsringen 26 versehen sind. Das Außenende der Fließpreßwerkzeuge 20 bzw. 21 ist bei dieser Ausführungsform mit einer Schließplatte 27 abgesperrt. Gegebenenfalls kann natürlich auch die Schließplatte 27 mit axialen Fließöffnungen versehen werden. Die radialen Fließöffnungen 25 sind nach außen konisch erweitert. Die Druckräume der Fließpreßwerkzeuge 20 bzw. 21 sind mit der Bezugszahl 28 bezeichnet (Fig. 2).

Die Fließpreßwerkzeuge 20 und 21 der Hochdruck-Fließzerkleinerungseinheit 5 arbeiten mit je einem axial verschiebbar gelagerten Preßkopf 29 bzw. 30 (Fließdorn) zusammen, welche im vorliegenden Falle in den Hohlwellen 9 bzw. 11 frei verschiebbar hindurchgeführt sind und an Kolbenstangen 33 bzw. 34 eines hydraulischen Arbeitszylinders 31 bzw. 32 anschließen. Der Hub der Arbeitszylinder 31 und 32 kann in an sich bekannter Weise verändert werden.

In Fig. 2 und 6 sieht man, daß der Arbeitszylinder 31 zu der Schnecke 6 und dem Fließpreßwerkzeug 20, der Arbeitszylinder 32 aber zu der Schnecke 8 und dem Fließpreßwerkzeug 21 koaxial angeordnet ist, wodurch man eine sehr kompakte Bauart erzielen kann.

Nach Fig. 1 ist unter den Fließpreßwerkzeugen 20 und 21 der Hochdruck-Fließzerkleinerungseinheit 5 ein Austrageband 35 vorgesehen, welches das Zerkleinerungsprodukt auffängt und fortlaufend abtransportiert.

Die an dem Fundament über die Böcke 16 und 17 befestigte Einrichtung wird im vorliegenden Falle von vier ausschließlich auf Zug beanspruchten Stangen 36, 37, 38, 39 zusammengefaßt, welche an ihren mit Gewinde versehenen Enden von Schraubenmuttern 40 und 41 zusammengehalten werden. Hierdurch werden die Reaktionskräfte sehr günstig aufgenommen.

Bei unseren Versuchen wurden - je nach dem Typ der zu zerkleinernden organischen Materialien - der Durchmesser der radialen Fließöffnungen 25 zwischen den Werten 1,5 - 5 mm, der Durchmesser des Druckraumes 28 der Fließpreßwerkzeuge 20 und 21 mit 50 mm, der Durchmesser der Schnecken 6 - 8 aber mit je 200 mm gewählt.

Gegebenenfalls können bei einem größeren Feuchtegehalt des zu zerkleinernden organischen Materials, z.B. von frischbelaubten Zweigen und Holzabfällen, die Innenräume 18 bzw. 19 der Mitteldruck-Verdichtungseinheit 4 mit einer oder mehreren Bohrung(en) 42 versehen werden (in Fig. 2 mit gestrichelter Linie eingezeichnet), die mit der freien Außenluft in Verbindung stehen. Über diese Bohrungen 42 kann die bei der Verdichtung herausgekelterte Feuchte die Einrichtung verlassen.

In Fig. 8 ist der Grundtyp des Fließpreßwerkzeuges 20 oder 21 zu sehen, wobei der Durchmesser der nach außen sich konisch erweiternden Fließöffnungen 25 mit "d", der Durchmesser des zylindrischen Druckraumes 28 aber mit "D" bezeichnet ist. Letzterer stimmt hier auch mit dem Durchmesser des Preßkopfes 29 bzw. 30 überein.

In Fig. 9 ist ein verbesserte Variante des Fließpreßwerkzeuges 20 bzw. 21 nach Fig. 8 dargestellt. Diese Variante unterscheidet sich grundsätzlich darin, daß hier - im Vergleich zum Durchmesser "D" des Preßkopfes 29 bzw. 30 - der Druckraum 28 einen vergrößerten Durchmesser "$D_1$" hat. Dies Durchmesser-bzw. Querschnittsvergrößerung beträgt erfindungsgemäß mindestens 10 %. Im dargestellten Fall wurde der Durchmesser "$D_1$" des Druckraumes 28 zu 60 mm, der Durchmesser "D" des Preßkopfes 29 bzw. 30 jedoch zu 50 mm gewählt.

Die mit dem Fließpreßwerkzeug 20 bzw. 21 nach Fig. 8 und Fig. 9 durchgeführte Zerkleinerung unterscheidet sich grundsätzlich darin, daß - während bei der Lösung nach Fig. 8 durch Hineinschieben des Preßkopfes 29 bzw. 30 immer mehr Ausfließöffnungen 25 abgesperrt werden, mithin eine gleichmäßige Fließgeschwindigkeit vorausgesetzt wird - im Druckraum 28 der Fließdruck ständig ansteigt, da ja der freie Schießöffnungsquerschnitt immer kleiner wird, bei der Lösung nach Fig. 9 aber der im Druckraum 28 vorherrschende Fließdruck fast bis zuletzt auf dem gleichen Wert bleibt, d. h. mit dem anfänglichen minimalen, kritischen Fließdruck übereinstimmt, weil nämlich sämtliche Fließöffnungen 25 durchwegs (d.h. während des Hubes des Preßkopfes) frei bleiben. Das erzwungene Zurückfließen des Materials im Druckraum 28 ist in Fig. 9 mit gestrichelten Pfeilen eingezeichnet.

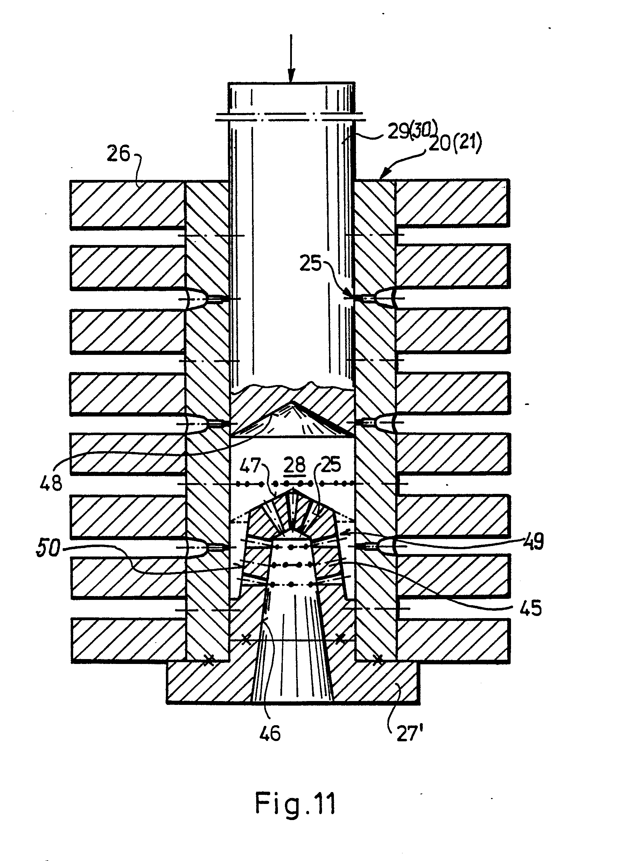

Der Unterschied der beiden Varianten gemäß Fig. 8 und 9 wird auch gut durch das Diagramm in Fig. 10 veranschaulicht, in welchem auf der Vertikalachse der Druck p, auf der Horizontalachse aber der Hub L aufgetragen sind. Hier bezieht sich der mit 5 bezeichnete Abschnitt auf den Fließabschnitt der Hochdruck--Fließzerkleinerungseinheit 5, wobei mit 43 die nach Fig. 8, mit 44 aber die nach Fig. 9 zum Fließpreßwerkzeug 20 bzw. 21 gehörigen Kurven bezeichnet sind.

Aus Fig. 10 ist ferner gut zu entnehmen, welche Vorgänge dem Fließzustand vorausgegangen sind: So bezieht sich auf die Niederdruck-Aufgabe-und Vorverdichtungseinheit 3 ein Niederdruckabschnitt 3, auf die Mitteldruck-Verdichtungseinheit 4 aber ein Abschnitt 4.

Das zu zerlleinernde organische Material wird fortlaufend in den Aufgabetrichter 2, z.B. aus einem Speichersilo, mit einem nicht besonders eingezeichneten Förderband aufgegeben. Die Schnecken 6 - 8 der Niederdruck-Aufgabe-und Vorverdichtungseinheit 3 geben das eingespeiste organische Material an die Mitteldruck-Verdichtungseinheit 4 weiter, währenddessen das Aufgabegut verdichtet wird. Dabei kann - je nach dem zu zerkleinernden Material - in dem gemeinsamen Arbeitsraum 12 ein Druck von 30 - 100 bar zustandekommen. Bei unseren Versuchen wurde der Druckwert zu 50 bar gewählt.

Aus Fig. 10 ist ferner ersichtlich, daß der Betriebsdruck in der Mitteldruck-Verdichtungseinheit 4 nahezu unverändert ist; dank der konisch sich verengenden Innenräume 18 und 19. Das Material wird hier entsprechend verdichtet und ge langt so fließend in das eine der Fließpreßwerkzeuge 20 bzw. 21 der Hochdruck-Fließzerkleinerungseinheit 5. In Anbetracht dessen, daß im vorliegenden Fall die Arbeitsräume 18 und 19 der Mitteldruck-Verdichtungseinheit 4 miteinander kommunizieren, führen die Schnecken 6 - 8 fortlaufend das zu zerkleinernde organische Material - über die Innenräume 18 und 19 - den Fließpreßwerkzeugen 20 bzw. 21, noch dazu abwechselnd zu. Da die zweifach wirkenden hydraulischen Arbeitszylinder 31 und 32 alternierend (nacheinander) betrieben werden, werden auch die von ihrem Hub in axialer Richtung bewegten Preßköpfe 29 und 30 abwechselnd in die angefüllten Arbeitsräume 28 der Fließpreßwerkzeuge 20 bzw. 21 hineingedrückt.

In Fig. 10 sieht man, daß im Druckraum 28 des Fließpreßwerkzeuges bei der Lösung nach Fig. 8 Druckspitzen sogar von 3000 - 4000 bar entstehen, während bei der Variante nach Fig. 9 höchstens Spitzen von 1000 - 1200 bar zustandekommen; sobald im Fließpreßwerkzeug 20 das Fließen beendet ist, beginnt sofort das Fließenlassen im anderen Fließpreßwerkzeug 21. Auf diese Weise erhält man -hinsichlich der ganzen Einrichtung - eine permanente (kontinuierliche) Betriebsweise, deren Steuerung z.B. hydraulisch in an sich bekannter Weise einfach gelöst werden kann.

Das zerkleinerte organische Material verläßt in fast gleichmäßigen Mengen das eben arbeitende Fließpreßwerkzeug 20 oder 21. Über die Fließöffnungen 25 fällt das Product auf den Bandförderer 35 und ist bei der Zerkleinerung von z.B. halbvulkanisierten Gummiabfällen wurmförmig bzw. Wurmsträhenbruch, während z.B. Holz und Holzabfallprodukte als Granulate erscheinen.

Die Drehzahlen der Schnecken 6 - 8 müssen dem jeweils zu zerkleindernden organischen Material gemäß gewählt werden. Für Materialien mit poröser Struktur z.B. Holz muß eine größere Drehzahl gewählt werden; bei weniger porösem Material aber, z.B. bei Kunststoffen und Gummiabfällen ist es zweckmäßig, eine kleinere Drehzahl zu wählen. Bei unseren Versuchen wählten wir ferner die Hubzeit der hydraulischen Arbeitszylinder 31 und 32 zu 15 s.

Die Einrichtung gemäß der Erfindung kann verhältnismäßig einfach automatisiert werden, wodurch sich die Tätigkeit des Bedienungspersonals nur noch auf das Anlassen und die Kontrolle beschränkt. Eventuelle Betriebsstörungen, z.B. Verstopfung der Aufgabevorrichtung, Materialmangel, kann die Einrichtung auto matisch anzeigen. Auf die Automatisierung bzw. Steuerung soll hier nicht näher eingegangen werden, da diese ja dem Fachmann aus der Beschreibung der Erfindung auf der Hand liegend sind.

Die mit der Einrichtung als eines der möglichen Ausführungsbeispiele erzielte, auch durch unsere Versuche bestätigte, sehr gute Energiebilanz wird teils dadurch erreicht, daß die Niederdruck-Aufgabe-und Vorverdichtungseinheit 3, die Mitteldruck-Verdichtungseinheit 4 und die Hochdruck-Fließzerkleinerungseinheit 5 in der Konstruktion koaxial angeordnet sind; demzufolge fließt der zu zerkleinernde Materialstrom von der Schnecke bis in den Druckraum 28 der Fließpreßwerkzeuge 20 bzw. 21 durchwegs in gerader Linie.

Mit dieser Maßnahme erzielt man zugleich eine sehr kompakte Bauart mit geringem spezifischem Platz-und Raumbedarf.

Die Einrichtung gemäß der Erfindung kann universell zum Zerkleinern von jedwedem Material organischer Herkunft verwendet werden, und zwar bei einem wesentlich kleineren Energiebedarf als der, welcher ansonsten bei den bekannten Einrichtungen entsteht. Die erfindungsgemäße Einrichtung bietet z. B. die Möglichkeit gleichermaßen zur Zerkleinerung und Pelletisierung von verschiedenen Holzsorten, Zweigen, belaubten Ästen, Stutzungslaub, Stengeln und Stielen landwirtschaftlicher Erzeugnisse und Haushaltsabfällen. Zur Zerkleinerung von Hauschaltsmüll muß der organische Abfallstoff vorher von jedwedem Metall befreit werden. Demzufolge kann der Haushaltsmüll in verdichteter und zerkleinerter Form mit einem beträchtlich besseren Wirkungsgrad wegtransportiert und z.B. zur Verbrennung in Kesseln besser ausgenützt werden.

Besonders geeignet ist ferner die Einrichtung gemäß der Erfindung zum Feinvermahlen von metallfreiem, und gegebenenfalls vorzerkleinertem Gummimaterial oder zum Zerkleinern von Kunststoffprodukten und ähnlichem, die vorher zur Aufgabe in den Aufgabetrichter zurechtgeschnitten und zerkleinert worden sind.

Diese Feingranulate können als Sekundärmaterial in der Gummi-bzw Kunststofferzeugung gut verwendet werden. Zu der obigen Zerstückelung kann im gegebenen Fall über dem Aufgabetrichter 2 eine bekannte Zerstücklungsvorrichtung eingebaut werden.

Bei der Einrichtung gemäß der Erfindung ist auch die Durchführung einer solchen intermittierenden Betriebsart möglich, bei welcher die Niederdruck-Aufgabe-und Vorverdichtungseinheit 3 aus einer einzigen Schnecke, die Mitteldruck-Verdichtungseinheit 4 aus einem einzigen, sich konisch verengenden Innenraum, die Hochdruck-Fließzerkleinerungseinheit 5 aber aus einem einzigen Fließpreßwerkzeug und dem mit diesem zusammenarbeitenden Preßkopf besteht. Der wesentliche Vorteil der dargestellten, vorzugsweise doppelten Ausführungsform besteht in der kontinuierlichen Betriebsweise, worauf schon früher hingewiesen wurde.

Das Fließpreßwerkzeug nach Fig. 9 hat den beträchtlichen Vorteil, daß dadurch der Fließdruck auf etwa ein Drittel gesenkt werden kann; demzufolge kann man eine sehr energiesparsame Materialzerkleinerung verrichten. Bemerkt sei noch, daß der Druckraum 28 in Fig. 9 nicht unbedingt zylindrisch sein muß. Es ist auch möglich, daß der Druckraum 28 hier gegen die beiden Enden zu sich verengt oder erweitert oder von einem faßartig gebogenen Mantel umgrenzt ist. Auch der Querschnitt des Druckraumes 28 kann von der Kreisform abweichen und z.B. ein Vieleck oder ein elliptischer Querschnitt sein.

Schließlich ist noch zu erwähnten, daß auch eine solche Variante der Hochdruck-Fließzerkleinerungseinheit 5 möglich ist, bei der der Preßkopf 29 bzw. 30 ortfest angeordnet ist und das Fließpreßwerkzeug 20 bzw. 21 in axialer Richtung verschiebbar ist oder alle beide bewegt werden.

Zum Abschluß möchten wir noch auf Fig. 11 hinweisen, in welcher wieder eine weitere Variante des erfindungsgemäßen Fließpreßwerkzeuges 20 bzw. 21 zu sehen ist. Diese Ausführungsart unterscheidet sich nur insofern von Fig. 9, als hier der Druckraum 28 nicht mit einer Platte sondern mit dem Schlußelement 27′ abgeschlossen wird. Dieses hat einen hohlen Ansatz 45, der sich nach innen konisch verengt und dessen mit der Außenluft kommunizierender innerer Hohlraum mit 46 bezeichnet ist. Der Hohlraum 46 ist gleichfalls mit Fließöffnungen 25 versehen. Die dem Druckraum 28 zugekehrte Stirnseite des Ansatzes 45 ist als Kegel 47 ausgebildet. Dieser wirkt mit einem auf der Stirnseite des Preßkopfes 29 bzw. 30 vorgesehenen hohlkegeligen Hohlraum 48 zusammen. Zwischen dem Innenmantel des Fließpreßwerkzeuges 20 bzw. 21 sowie einer konischen äußeren Mantelfläche 50 des Ansatzes 45 wird dadurch ein Ringraum 49 ausgebildet, der ähnlich wie bei der erörterten Ausführung gemäß Fig. 9 wirkt.

## Ansprüche

1. Einrichtung zum Zerkleinern von organischen Materialien, mit einer Fließzerkleinerungseinheit (5), die wenigstens ein mit axialen und/oder radialen Fließöffnungen (25) versehenes Fließpreßwerkzeug und einen mit diesem zusammenwirkenden Preßkopf (29, 30) aufweist, deren gegenseitige axiale Lage veränderbar ist, dadurch gekennzeichnet, daß vor der Hochdruck-Fließzerkleinerungseinheit (5) - in der Fortschreitrichtung des zu zerkleinernden Materials gesehen - eine Mitteldruck-Verdichtungseinheit (4), vor dieser aber eine Niederdruck-Aufgabe-und Vorverdichtungseinheit (3) angeordnet ist, und daß die Niederdruck-Aufgabe-und Vorverdichtungseinheit (3) mindestens eine angetriebene Schnecke (6, 7, 8) aufweist, deren Abgabeende an einen sich trichterartig verengenden Innenraum (18, 19) der Mitteldruck-Verdichtungseinheit (4) an dessen Ende mit dem größeren Querschnitt anschließt, während an das den kleinern Querschnitt aufweisende andere Ende des Innenraumes (18, 19) der Mitteldruck-Verdichtungseinheit (4) der Druckraum (28) des Fließpreßwerkzeuges (20, 21) anschließt.

2. Einrichtung nach Anspruch 1, dadurch gekennzeichnet, daß die Schnecke (6) der Niederdruck-Aufgabe-und Vorverdichtungseinheit (3) mit dem trichterartigen Innenraum (18) der Mitteldruckverdichtungseinheit (4) sowie das Fließpreßwerkzeug (20) der Hochdruck-Fließzerkleinerungseinheit (5) koaxial zueinander angeordnet sind.

3. Einrichtung nach Anspruch 1 oder 2, dadurch gekennzeichnet, daß die NiederdruckAufgabe-und Vorverdichtungseinheit (3) zwei zueinander parallele Schnecken (6, 8) und die Mitteldruck-Verdichtungseinheit (4) zwei trichterförmige Innenräume (18, 19), und die Hochdruck-Fließzerkleinerungseinheit (5) zwei Fließpreßwerkzeuge (20, 21) aufweisen und diese letzteren mit je einem in axialer Richtung verschiebbaren Preßkopf (29 bzw. 30) versehen sind, wobei die Preßköpfe (29, 20) einander abwechselnd betrieben werden.

4. Einrichtung nach Anspruch 3, dadurch gekennzeichnet, daß die beiden Innenräume (18, 19) der Mitteldruck-Verdichtungseinheit (4) miteinander kommunizieren.

5. Einrichtung nach Anspruch 3 oder 4, dadurch gekennzeichnet, daß die Niederdruck-Aufgabe-und Vorverdichtungseinheit (3) eine mit den beiden parallelen Schnecken (6, 8) zusammenwirkende dritte zentrale Schnecke (7) aufweist und die drei Schnecken in einem gemeinsamen Arbeitsraum (12) des Gehäuses (1) untergebracht sind und vorzugsweise mit einem gemeinsamen Antrieb (13) in Treibverbindung stehen, dessen Drehzahl regulierbar ist.

6. Einrichtung nach einem der Ansprüche 3 bis 5, dadurch gekennzeichnet, daß die Preßköpfe (29, 30) in den als Hohlwelle ausgebildeten Wellen (9 bzw. 11) der Schnecken (6 bzw. 8) der Niederdruck-Aufgabe-und Vorverdichtungseinheit (3) axial verschiebbar angeordnet sind.

7. Einrichtung nach einem der Ansprüche 1 bis 6, dadurch gekennzeichnet, daß der Querschnitt des Druckraumes 828) der Fließpreßwerkzeuge (20, 21) der Hochdruck-Fließzerkleinerungseinheit (5) größer ist als der Querschnitt der Preßköpfe (29, 30).

8. Einrichtung nach Anspruch 7, dadurch gekennzeichnet, daß der Druckraum (28) der Fließpreßwerkzeuge (20, 21) zylindrisch ist, ihr Durchmesser ($D_1$) aber mindestens um 10 % größer ist als der Druchmesser (D) der zylindrischen Preßköpfe (29, 30).

**Fig.1**

**Fig.6**

**Fig.2**

**Fig.7**

0 256 241

Fig.3          Fig.4          Fig.5

Fig.10

Fig. 8

Fig. 9

26

29(30) 20(21)

25

48

47 28 25

50

49

45

46 27'

Fig.11